# EUROPÄISCHE PATENTSCHRIFT

(11) **EP 0 483 102 B1**
(45) Veröffentlichungstag und Bekanntmachung des Hinweises auf die Patenterteilung: **11.01.1995**
(21) Anmeldenummer: 91890249.5
(22) Anmeldetag: 21.10.1991
(51) Int. Cl.: A47J 47/10, B65D 81/20

(54) **Behälter zur Aufbewahrung und zum Transport biologischer Substanzen, insbesondere Lebensmittel**
Container for storage and transport of biological substances, especially foodstuffs
Conteneur pour conserver et transporter des substances biologiques, notamment comestibles

(30) Priorität: 22.10.1990 AT 2126/90
(43) Veröffentlichungstag der Anmeldung: 29.04.1992
(73) Patentinhaber: SOLICH GESELLSCHAFT m.b.H, A-1140 Wien (AT)
(72) Erfinder: Solich, Karl, A-1140 Wien (AT)
(74) Vertreter: Krause, Walter, Dr. Dipl.-Ing.

(56) Entgegenhaltungen:
- EP-A- 0 391 155
- AT-B- 283 100
- AT-B- 387 759
- FR-A- 2 320 030
- US-A- 4 222 276

## Beschreibung

Die Erfindung bezieht sich auf einen Behälter zur Aufbewahrung und zum Transport biologischer Substanzen, insbesondere Lebensmittel, mit einem über ein Ventil evakuierbaren Innenraum sowie einem weiteren Ventil zur Belüftung des Behälters, welches einen federbelasteten, vom variablen Unterdruck im Behälter in seiner axialen Stellung verschiebbaren Ventilkörper aufweist, wobei die Ventile in eine Mulde der Wandung des Dekkels des Behälters bis unter das Niveau der Außenfläche der Wandung eingelassen sind.

Ein Behälter der eingangs genannten Art ist beispielsweise aus der FR-A 2 320 030 bekannt geworden. Der hier beschriebene Haushaltsbehälter für die Speisenkonservierung im Vakuum weist in seinem Deckel im wesentlichen gleichartig aufgebaute Ventile für die Evakuierung und die Belüftung des Behälters auf. Beide Ventile weisen federbelastete Ventilkörper auf, welche unter Zwischenlage eines O-Ringes gegen die Außenseite (Evakuierungsventil) bzw. gegen die Innenseite (Belüftungsventil) des Deckels abdichten. Auf den Ventilkörper des Evakuierungsventils kann das Ende einer Pumpe dichtend aufgesetzt werden, wobei der sich bildende Unterdruck das Ventil öffnet, sodaß der Innenraum des Behälters evakuiert werden kann. Das Belüftungsventil kann mittels Fingerdruck entgegen der Kraft der Schließfeder von seinem Ventilsitz abgehoben werden, wodurch der Behälter belüftet wird. Beide Ventile sind unter das äußere Niveau der Außenfläche des Deckels abgesenkt.

Nachteilig bei diesem bekannten Haushaltsbehälter ist die Tatsache, daß der herrschende Innendruck von außen nicht erkennbar bzw. kontrollierbar ist.

Weiters sind derartige Behälter auch aus der AT-PS 387 759 bekannt. Diese bestehen aus einem zylindrischen Mantelteil und einem kalottenförmig ausgebildeten Boden und Deckel. Diese bekannten Behälter haben sich zwar gut bewährt und umschließen mit ihrem Gehäuse stapelbare Einsätze zur Aufnahme von biologischen Substanzen, insbesondere Frischfleisch, sind aber wegen der gewölbten Form von Deckel und Boden sowie den daran befestigten Füßen selbst nicht stapelbar. Sie können daher, wenn sie in größerer Zahl vorhanden sind, den zur Verfügung stehenden Raum nicht zufriedenstellend ausnutzen.

Weiters ist aus der EP-A 391 155 ein Gastro-Normbehälter für Lebensmittel bekanntgeworden, welcher aus einem unteren schalenförmigen Teil und einem abnehmbaren Deckel mit einer dazwischen angeordneten Dichtung besteht. Der Deckel weist eine Öffnung auf, in die ein Vakuumventil eingebaut ist. Das Ventil wird sowohl zum Evakuieren als auch zum Belüften des Behälters verwendet. Eine Möglichkeit zur Druckanzeige ist auch hier nicht vorgesehen.

Weitere derartige Behälter sind aus der AT-PS 283 100 bekannt, welche jedoch schüsselartig aufgebaut und daher nicht stapelbar sind bzw. bei welchen das Belüftungsventil und die Druckanzeigeeinrichtung vom Unterteil des Behälters seitlich absteht und dadurch leicht beschädigt werden können.

Aus der US-PS 4 222 276 ist ferner ein Ventilgehäuse mit Ventilen zum Evakuieren und Belüften eines Behälters bekannt, in welches auch eine Druckanzeigevorrichtung integriert ist. Diese besteht aus einem in einem Zylinder des Ventilgehäuses axial geführten und federbelasteten Kolben, welcher einen durch eine Öffnung des Ventilgehäuses herausragenden Skalenzapfen aufweist. Der aus dem Ventilgehäuse hervorragende Teil des Skalenzapfens ist dabei ein Maß für den Behälterinnendruck. Ventilgehäuse und vor allem der Skalenzapfen stehen vom Behälter weit vor und sind daher sehr leicht zu beschädigen.

Aufgabe der Erfindung ist es, einen Behälter zu schaffen, welcher die obengenannten Nachteile vermeidet, welcher bessere Bedingungen zur längerfristigen Aufbewahrung und Lagerung von Speisen aller Art gewährleistet und bei welchem der im Inneren herrschende Druck auf einfache Weise über gegen mechanische Beschädigung weitgehend geschützte Mittel abgelesen werden kann.

Dieses Ziel wird bei einem Behälter der eingangs genannten Art dadurch erreicht, daß der Ventilkörper zusammen mit einer Druckskala am Ventilgehäuse des Ventils zum Belüften des Behälters eine Druckanzeigevorrichtung bildet, daß das Ventil zum Belüften des Behälters aus einem stufenartig nach außen erweiterten Ventilgehäuse und dem darin axial geführten Ventilkörper besteht, wobei die Druckskala der Druckanzeigevorrichtung an der Innenseite des erweiterten Bereiches des Ventilgehäuses angebracht ist, sowie daß der Ventilkörper einen Kanal aufweist, welcher in der Belüftungsstellung mit dem Innenraum des Behälters und zumindest einem Belüftungskanal im Ventilgehäuse in Verbindung steht.

Im Gegensatz zu den in der Beschreibungseinleitung beschriebenen Behältern bzw. deren Belüftungsventile, weist das Ventil nach der Erfindung auch die Funktion eines Sicherheitsventiles auf. Der Ventilkörper kann nämlich sowohl durch Fingerdruck beim Belüften in seine Belüftungsstellung gebracht werden als auch durch den äußeren Luftdruck bei zu geringem Innendruck. Falls beispielsweise die Pumpe zum Evakuieren des Behälters zu spät abgeschaltet wird und die aus der Druckdifferenz zwischen Außern- und Innendruck resultierende Kraft die Federkraft der Ventilfeder überschreitet, kommt es zu einer axialen Bewegung des Ventilkörpers, bis dessen Kanal mit dem Belüftungskanal im Ventilgehäuse kommuniziert und Luft in den Behälter eintritt. Eine Zerstörung des Behälters durch zu geringen Innendruck wird dadurch vermieden.

Ein besonders einfaches Überwachen der Temperatur bei Vorhandensein einer Wärmeisolation ohne Beeinträchtigung der Stapelbarkeit der Behälter ergibt sich weiters dadurch, daß auch ein Thermometer bis unter das Niveau der Außenfläche in die Wandung des Behälters eingelassen sein kann.

In einer Ausführungsvariante ist vorgesehen, daß der Kanal im Ventilkörper aus einer axialen Sackbohrung besteht, welche mit einer in der Belüftungsstellung mit den Belüftungskanälen kommunizierenden Querbohrung verbunden ist.

Eine weitere Verbesserung der Erfindung ergibt sich dadurch, daß das Ventil zum Belüften des Behälters und das Ventil zum Evakuieren des Innenraumes in eine an die Form der Ventile angepaßte Mulde eingelassen und in einen den Boden der Mulde verstärkenden in die Wandung des Deckels eingegossenen Einsatz eingeschraubt sind.

Sollen insbesondere mehrere Behälter in einem Gestell gemeinsam evakuiert werden, so ist es besonders günstig, wenn das Ventil zur Evakuierung des Innenraumes des Behälters und das Ventil zur Belüftung des Behälters in einander gegenüberliegenden Wandbereichen des Behälters angeordnet sind.

Die Erfindung soll nun anhand von zum Teil schematischen Zeichnungen näher erläutert werden; dabei zeigen:
- Fig. 1: eine Schrägansicht einer vorzugsweisen Ausführungsform des erfindungsgemäßen Behälters,
- Fig. 2: einen Schnitt nach der Linie II-II nach Fig. 1,
- Fig. 3: einen Schnitt nach der Linie III-III nach Fig. 1,
- Fig. 4 und Fig. 5: eine Schnittdarstellung eines beim erfindungsgemäßen Behälter verwendbaren Evakuierungsventiles in Ruhestellung bzw in Evakuierungsstellung,
- Fig. 6 bis Fig. 8: Schnittdarstellungen eines beim erfindungsgemäßen Behälter verwendbaren Belüftungsventiles in verschiedenen Stellungen, sowie
- Fig. 9: eine Ausführungsvariante eines Belüftungsventiles.

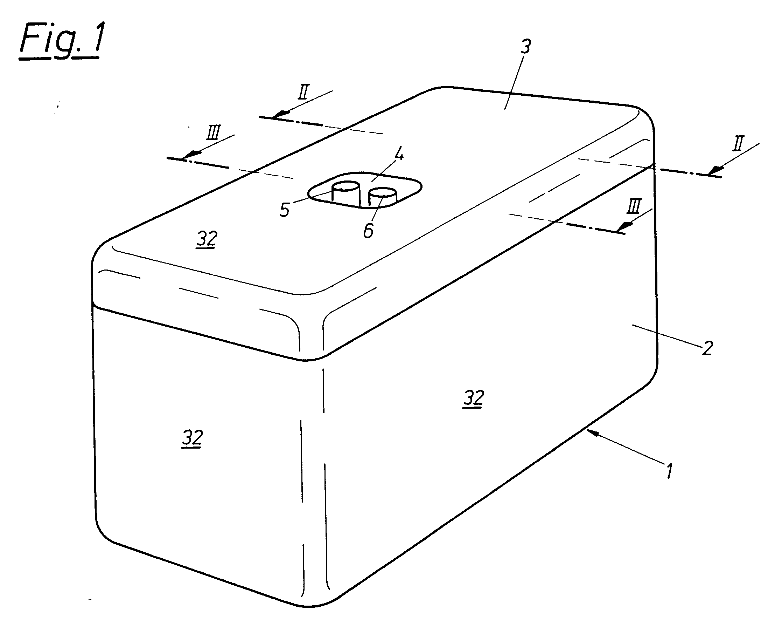

In Fig. 1 ist eine vorzugsweise Ausführungsform des erfindungsgemäßen Behälters 1 bestehend aus einem schalenförmigen Unterteil 2 und einem darauf aufgesetzten Deckel 3 dargestellt. Dieser Behälter kann auch mit einem Wärme- und Kältespeicher versehen sein. In einer Mulde 4 des Deckels 3 sind ein Ventil 5 zur Evakuierung des Innenraumes 1' des Behälters 1 sowie ein Ventil 6 zur Belüftung des Behälters 1 samt Druckanzeigevorrichtung angeordnet. Die Ventile 5 und 6 sind bis unter das Niveau der äußeren Ebene 32 der Wandung des Behälters 1 eingelassen.

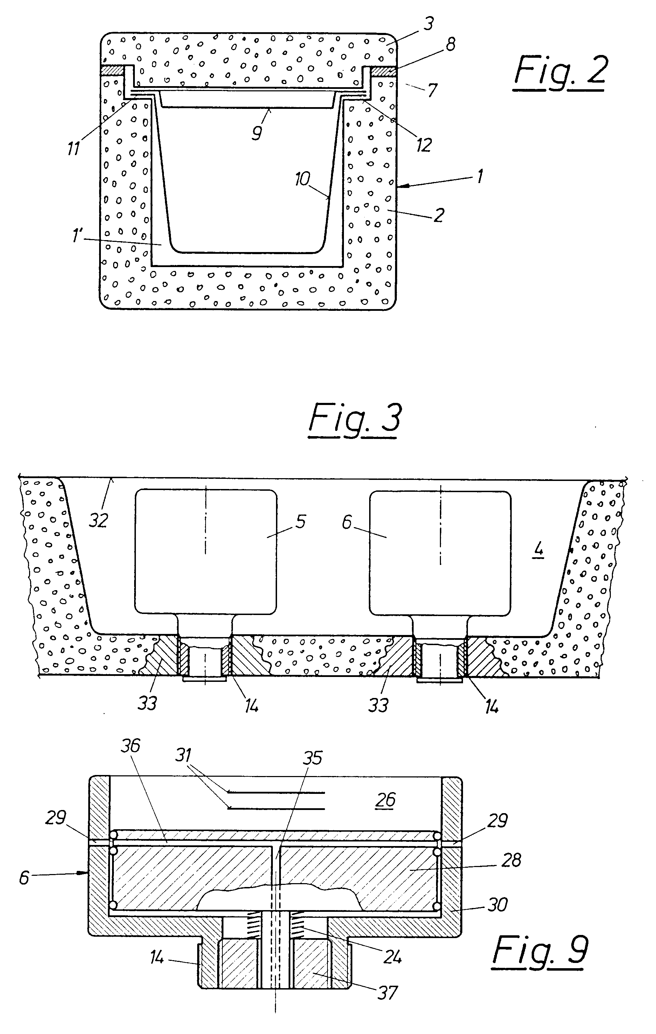

Aus der Darstellung nach Fig. 2 sind der abgestufte Deckel 3, eine auf dem oberen Rand 7 des Unterteiles 2 zur Anlage kommende Dichtung 8, ein Deckel 9 eines gegebenenfalls in Abteile gegliederten Innengefäßes 10, welches mit seinem Rand 11 auf einer inneren Abstufung 12 des Unterteiles 2 des Behälters 1 zur Anlage kommt, ersichtlich. Im Deckel 9 des Innengefäßes 10 ist mindestens eine kleine Öffnung zur Ent- und Belüftung der Speisen bzw. der biologischen Substanzen vorhanden.

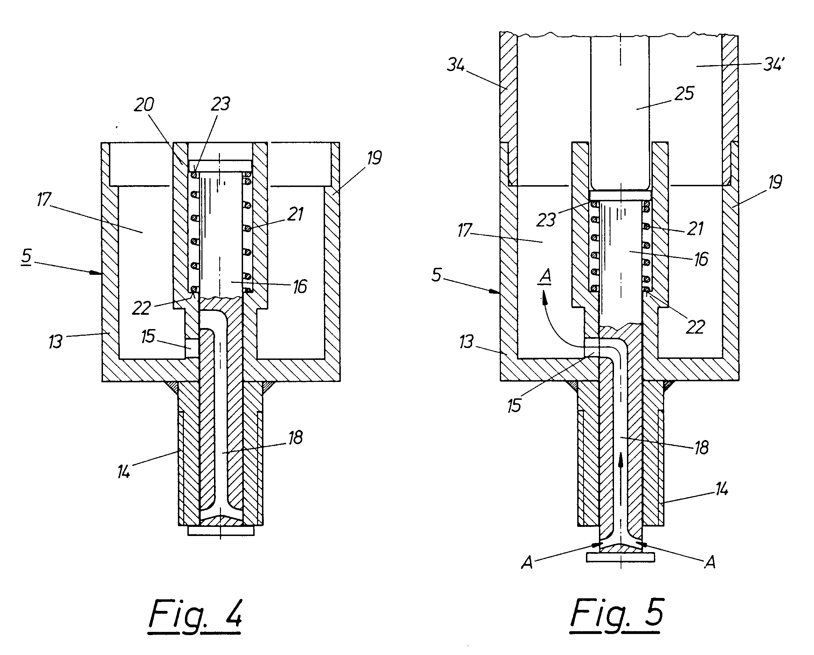

Fig. 3 zeigt schematisch den Aufbau der die Ventile 5 und 6 aufnehmenden Mulde 4, wobei hier die Ventile in einen den Boden der Mulde verstärken Einsatz 33 eingeschraubt sind, der in den Deckel 3 eingegossen ist. Die in Fig. 4 und 5 gezeigte Ausführungsform des Ventiles 5 zur Evakuierung des Innenraumes 1' des Behälters 1 besteht aus einem rohrförmigen Ventilgehäuse 13 mit einem Einschraubgewinde 14, einem mit einem Evakuierungskanal 18 versehenen Ventilkörper 16 sowie einem zur Evakuierung dienenden Ringkanal 17, der von einer äußeren abgestuften Rohrwand 19 zum Anschließen einer Steckkupplung 34 und von einer inneren Ringwand 20 umschlossen ist. An einer Abstufung 22 einer inneren Ringwand 20 des Ventilgehäuses 13 einerseits und einer Abstufung 23 des Ventilkörpers 16 anderseits liegt eine schraubenförmig gewundene Druckfeder 21 an, welche dazu dient , das Ventil in seiner Schließstellung zu halten.

Soll nun der Innenraum 1' des Behälters 1 evakuiert werden, so wird die Steckkupplung 34 der Verbindungsleitung 34' zum hier nicht dargestellten Unterdruckaggregat zusammen mit einem Einstoßdorn 25 an das obere Ende des Ventiles 5 angeschlossen, so daß der Ventilkörper 16 die in Fig. 5 gezeigte Position einnimmt und der Innenraum 1' über den mit Pfeilen A angedeuteten Weg über den Evakuierungskanal 18 und eine Evakuierungsöffnung 15 in der Ringwand 20 evakuiert werden kann. Nach Beendigung des Evakuierungsvorganges, d.h. nach Erreichen des gewünschten Unterdruckes Von vorzugsweise 0,4 bar wird die Steckkupplung 34 mit dem Einstoßdorn 25 abgezogen, sodaß der Ventilkörper 16 des Ventiles 5 wieder in die in Fig. 4 gezeigte Position kommt.

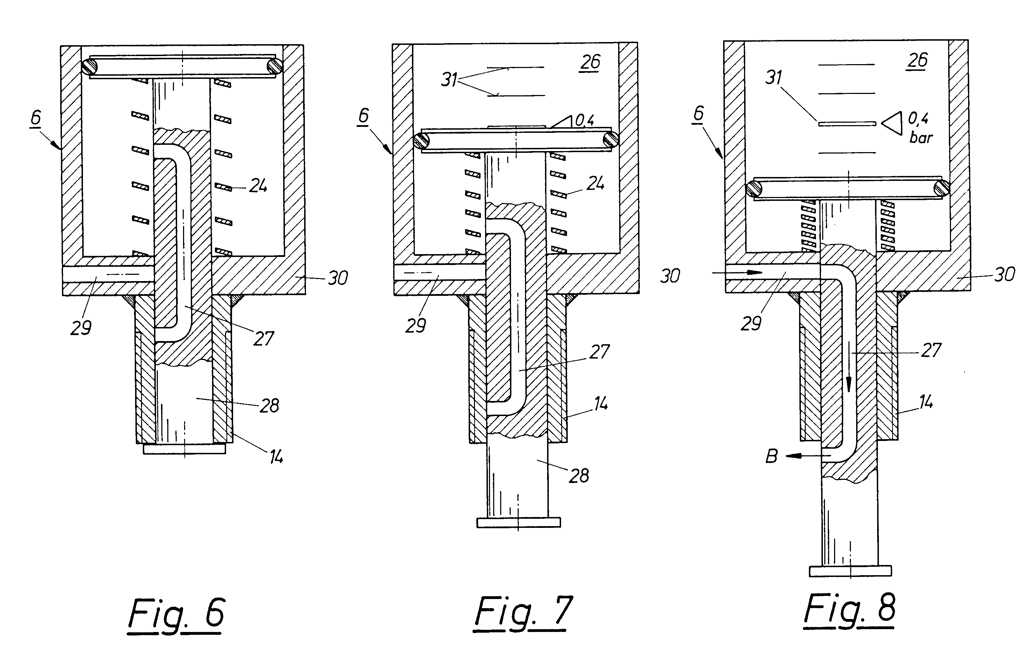

Die Fig. 6 zeigt das Ventil 6 zur Belüftung in der Ruhestellung bzw. mit entlasteter Druckfeder 24, in Fig. 7 in jener Stellung, welche das Ventil bei optimalem Unterdruck im Behälter 1 einnimmt, und in Fig. 8 in jener Stellung, welche es bei Belüftung des Behälters 1 einnimmt, wobei der über den Kanal 27 im Ventilkörper 28 und dem Belüftungskanal 29 im Ventilgehäuse 30 vorhandene Belüftungsweg mit Pfeilen B angedeutet ist. Die Druckskala an der Innenseite des erweiterten Bereiches des Ventiles 6 ist mit 31 bezeichnet. Die Druckskala 31 bildet zusammen mit dem axial verschiebbaren Ventilkörper 28 die Druckanzeigevorrichtung 26.

In die in Fig. 8 dargestellte Belüftungsstellung kann der Ventilkörper 28 durch Fingerdruck gebracht werden. Der Ventilkörper muß in dieser Stellung bis zum Druckausgleich gehalten werden. Das Ventil 6 wirkt jedoch auch als Sicherheitsventil, da bei zu großer Druckdifferenz zwischen Außen- und Innendruck die auf den Ventilkörper wirkende Druckdifferenz automatisch eine axiale Verschiebung des Ventilkörpers bis zur Aufsteuerung des Belüftungskanals 27, 29 bewirkt und so eine Beschädigung des Behälters verhindert wird.

Die in Fig. 9 dargestellte Ausführungsvariante des Belüftungsventils 6 entspricht funktionell weitgehend dem in den Fig. 6 bis 8 dargestellten Ventil. Der Kanal im Ventilkörper 28 besteht hier aus einer axialen Sackbohrung 35, welche mit einer in der dargestellten Belüftungsstellung mit den Belüftungskanälen 29 kommunizierenden Querbohrung 36 verbunden ist. Die Druckfeder 24 stützt sich hier an einem in das Ventilgehäuse 30 eingeschraubten Anlageelement 37 ab.

Mit Hilfe der Erfindung können auch bekannte stapelbare, vorzugsweise wärmeisolierte Behälter, z.B. durch Auswechseln des Deckels, leicht umgerüstet werden.

Die versenkbaren Evakuierungs - und Belüftungsventile werden vorzugsweise gemeinsam in eine an die Form der Ventile angepaßte Vertiefung oder Mulde 4 des Deckels eingeschraubt.

Der Korpus des Behälters kann entweder durch metallische Einsätze (siehe Fig. 3) - die eingegossen werden - verstärkt werden oder man muß die Materialstärke der inneren Kunststoffbeschichtung verstärken und gleichzeitig mit einem geeigneten Isolierschaum eine feste Verbindung mit der Äußenschicht herstellen.

Die Ventile bestehen vorzugsweise entweder aus rostfreiem Stahl oder aus Polyäthylen. Am Deckel kann eine an sich bekannte Verriegelung, z.B. ein Spannverschluß, angebracht sein.

Für die Evakuierung des Behälters ist eine Vakuumpumpe, zweckmäßig mit Pufferspeicher und Vakuumregelventil, notwendig. Diese wird bei Handbedienung mittels Schlauch, Schlauchtülle und Schlauchkupplung mit dem Ventil 5 des Behälters verbunden.

Durch die Erfindung ergibt sich die Möglichkeit, bei den kritischen Temperaturbereichen - bei der Warmhaltung unter 70° C sowie bei der Kalthaltung über 7-8° C - über einen längeren Zeitraum die Baktierenbildung weitgehend zu vermeiden bzw. zu verzögern.

## Patentansprüche

1. Behälter zur Aufbewahrung und zum Transport biologischer Substanzen, insbesondere Lebensmittel, mit einem über ein Ventil (5) evakuierbaren Innenraum (1') sowie einem weiteren Ventil (6) zur Belüftung des Behälters (1), welches einen federbelasteten, vom variablen Unterdruck im Behälter (1) in seiner axialen Stellung verschiebbaren Ventilkörper (28) aufweist, wobei die Ventile (5, 6) in eine Mulde (4) der Wandung des Deckels (3) des Behälters (1) bis unter das Niveau der Außenfläche der Wandung eingelassen sind, **dadurch gekennzeichnet,** daß der Ventilkörper (28) zusammen mit einer Druckskala (31) am Ventilgehäuse (30) des Ventils (6) zum Belüften des Behälters (1) eine Druckanzeigevorrichtung (26) bildet, daß das Ventil (6) zum Belüften des Behälters (1) aus einem stufenartig nach außen erweiterten Ventilgehäuse (30) und dem darin axial geführten Ventilkörper (28) besteht, wobei die Druckskala (31) der Druckanzeigevorrichtung (26) an der Innenseite des erweiterten Bereiches des Ventilgehäuses (30) angebracht ist, sowie daß der Ventilkörper (28) einen Kanal (27) aufweist, welcher in der Belüftungsstellung mit dem Innenraum (1') des Behälters und zumindest einem Belüftungskanal (29) im Ventilgehäuse (30) in Verbindung steht.

2. Behälter nach Anspruch 1, **dadurch gekennzeichnet,** daß der Kanal (27) im Ventilkörper (28) aus einer axialen Sackbohrung (35) besteht, welche mit einer in der Belüftungsstellung mit den Belüftungskanälen (29) kommunizierenden Querbohrung (36) verbunden ist.

3. Behälter nach Anspruch 1 oder 2, **dadurch gekennzeichnet,** daß das Ventil (6) zum Belüften des Behälters (1) und das Ventil (5) zum Evakuieren des Innenraumes (1') in eine an die Form der Ventile (5, 6) angepaßte Mulde (4) eingelassen und in einen den Boden der Mulde verstärkenden in die Wandung des Deckels eingegossenen Einsatz (33) eingeschraubt sind.

4. Behälter nach Anspruch 1 oder 2, insbesondere zum Einschieben in Gestelle oder Transportwagen, wo gleichzeitig mehrere Behälter evakuierbar sind, **dadurch gekennzeichnet,** daß das Ventil (5) zur Evakuierung des Innenraumes (1') des Behälters (1) und das Ventil (6) zur Belüftung des Behälters in einander gegenüberliegenden Wandbereichen des Behälters angeordnet sind.

## Claims

1. Container for the storage and transport of biological substances, especially foodstuffs, with an interior space (1') evacuated by a valve (5) as well as a further valve (6) for ventilation of the container (1), which has a spring-loaded valve body (28) movable axially in response to variable reduced pressure in the container, the valves (5, 6) being inserted in a recess (4) in the wall of the lid (3) of the container (1) under the level of the outer surface of the wall, characterised in that, the valve body (28) forms, together with a pressure scale (31) on the valve housing (30) of the valve (6) for ventilation of the container (1), a pressure gauge device (26), the valve (6) for ventilation of the container (1) consists of a stepped externally enlarged valve housing (30) and in which the valve body (28) is axially movable, the pressure scale (31) of the pressure gauge device (26) is attached to the internal face of the enlarged region of the valve housing (30) as well as that the valve body (28) has a passage (27) which in the ventilating position is connected with the interior space (1') of the container and at least one ventilating passage (29) in the valve housing (30).

2. Container according to claim 1, characterised in that the passage (27) in the valve body (28) comprises an axial bore (35) which is connected with a cross-bore (36) communicating in the ventilating position with the ventilating passages (29).

3. Container according to claim 1 or 2, characterised in that the valve (6) for ventilating the container (1) and the valve (5) for evacuating the interior space (1') are mounted in a recess adapted to the form of the valves (5, 6) and are screwed into an integral insert (33) in the base of the recess reinforcing the wall of the lid.

4. Container according to claim 1 or 2, especially for insertion in frames or transport vehicles, where several containers are evacuated simultaneously, characterised in that the valve (5) for evacuating the interior space (1') of the container (1) and the valve (6) for ventilating the container are arranged in wall regions of the container which face one another.

## Revendications

1. Conteneur pour la conservation et le transport de substances biologiques notamment de produits alimentaires, comportant une cavité (1') dans laquelle on fait le vide par l'intermédiaire d'une soupape (5) ainsi que d'une autre soupape (6) pour ventiler le conteneur (1), et ayant un corps de soupape (28) coulissant dans sa position axiale sous l'effet d'une dépression variable dans le conteneur (1), en étant chargé par un ressort, les soupapes (5, 6) étant encastrées dans une goulotte (4) de la paroi du couvercle (3) du conteneur (1), jusqu'en dessous du niveau de la surface extérieure de la paroi, conteneur caractérisé en ce que le corps de soupape (28) forme avec une échelle de pression (31) prévue sur le boîtier (30) de la soupape (6) pour la ventilation du conteneur (1), un dispositif indicateur de pression (26) et la soupape (6) pour ventiler le réservoir (1) se compose d'un boîtier de soupape (30) qui s'élargit vers l'extérieur de manière échedonnée et reçoit en le guidant axialement, un corps de soupape (28), l'échelle des pressions (31) du dispositif d'affichage de pression (26) étant prévue sur le côté intérieur de la zone élargie du boîtier de soupape (30) et le corps de soupape (28) comporte un canal (27) qui en position de ventilation communique avec la cavité (1') du conteneur et au moins un canal de ventilation (29) dans le boîtier de soupape (30).

2. Conteneur selon la revendication 1, caractérisé en ce que le canal (27) du corps de soupape (28) se compose d'un trou borgne (35), axial, relié à un perçage transversal (36) qui communique avec les canaux de ventilation (29) en position de ventilation.

3. Conteneur selon la revendication 1 ou 2, caractérisé en ce que la soupape (6) pour ventiler le réservoir (1) et la soupape (5) pour vider la cavité (1) sont encastrées dans une goulotte (4) adaptée à la forme des soupapes (5, 6) et sont vissées dans un insert (33) encastré dans la paroi du couvercle et qui renforce le fond de la goulotte.

4. Conteneur selon la revendication 1 ou 2, notamment pour être engagé dans un bâti ou un chariot de transport qui assure la mise sous vide simultanée de plusieurs conteneurs, caractérisé en ce que la soupape (5) faisant le vide du volume intérieur (1') du conteneur (1) et la soupape (6) pour ventiler le conteneur sont prévues dans des zones de paroi opposées du conteneur.
